Europäisches Patentamt

European Patent Office

Office européen des brevets

(11) Publication number: **0 036 459**
A1

# EUROPEAN PATENT APPLICATION

(21) Application number: 80300882.0

(22) Date of filing: 21.03.80

(51) Int. Cl.³: **G 05 B 19/18**, B 23 Q 35/12

(43) Date of publication of application: 30.09.81
Bulletin 81/39

(84) Designated Contracting States: **AT BE CH DE FR GB IT
LU NL SE**

(71) Applicant: **FUJITSU FANUC LIMITED, 5-1,
Asahigaoka, 3-chome, Hino-shi, Tokyo 191 (JP)**

(72) Inventor: **Imazeki, Ryoji, No. 987-44, Naganuma-cho,
Hachioji-shi Tokyo (JP)**
Inventor: **Yamazaki, Etuo, No. 566-93, Shimoongata-cho,
Hachioji-shi Tokyo (JP)**

(74) Representative: **Bedggood, Guy Stuart et al, Haseltine
Lake & Co. Hazlitt House 28 Southampton Buildings
Chancery Lane, London WC2A 1AT (GB)**

(54) Tracer control apparatus.

(57) The apparatus has a memory (MEM) holding data
[(e.g. start point (A), tracing turning points (X1, X2) pick
feed quantity (P), tracing end position (Y1), automatic
return position (Z1)] determining a tracer machining opera-
tion to be effected. In particular the memory (MEM) holds
reference deflection signal data setting an initial reference
deflection signal value ($\varepsilon_0$) for comparison with a com-
posite displacement signal ($\varepsilon$) from the tracer head (TR)
of tracer machining apparatus in a first tracing operation,
and data ($\triangle\varepsilon_0$) setting further reference deflection signal
values ($\varepsilon_0+\triangle\varepsilon_0$) for comparison with the composite dis-
placement signal ($\varepsilon$) for further tracing operations. A pro-
cessor (CPU) reads out data from the memory (MEM) to
control the tracer machining apparatus to effect successive
tracing operations at progressively changing reference
deflection signal values, so that automatic machining opera-
tions can be carried out continuously from rough to finish-
machining.

-1-

TRACER CONTROL APPARATUS

This invention relates to tracer control apparatus.

In a tracer control apparatus in which the direction and velocity of tracing are calculated through utilization of signals from a tracer head tracing the model surface, it is a general practice to use different reference deflection or displacement values for the tracer head for rough and finish machining operations so as to reduce overall machining time and to provide for enhanced accuracy in machining operations. Previously, however, since the alteration of the reference deflection has been carried out by voltage applying means using a potentiometer or by mechanical means, and a manual operation has been needed for each alteration, which has made it difficult to perform machining operations continuously from rough to finish machining.

According to the present invention there is provided tracer control apparatus, characterised by a memory holding data determining tracer machining operations to be effected, including reference deflection data designating an initial reference deflection signal value for comparison, in a first tracing operation, with a composite displacement signal derived from displacement signals from the tracer head of tracer machining apparatus with which the control apparatus is employed, and data determining successive further reference deflection signal values for successive further tracer machining operations, and

a processor operable to read out the data held in the memory, and in dependence upon the read out data, to apply control signals to the tracer machining apparatus such as to cause the machining apparatus to effect initial and successive tracer machining operations in accordance with the stored reference deflection data.

Embodiments of the present invention can provide tracer control apparatus which automatically modifies the reference deflection of the tracer head for each machining operation to thereby permit continuous tracing from rough to finish machining.

Embodiments of the present invention can provide tracer control apparatus in which data concerning the reference deflection of the tracer head is prestored in a memory and, based on the stored data, the reference deflection is automatically modified to permit continuous machining operations from rough to finish machining without a break, thereby reducing machining time.

Briefly stated, in a tracer control apparatus embodying the present invention, data concerning the deflection of the tracer head is prestored in a memory and read out therefrom by a processor to alter the deflection for each profile modelling operation; a comparison is made between a composite displacement signal, derived from displacement signals from the tracer head, and a reference deflection signal to obtain from the comparison a difference signal; and tracer control is carried out in accordance with the difference signal.

Reference will be made, by way of example, to the accompanying drawings, in which:-

Fig. 1 is a schematic block diagram illustrating apparatus embodying the present invention;

Fig. 2 is a schematic diagram explanatory of one example of a tracing path for assistance in explanation of the present invention; and

Fig. 3 is a flowchart explanatory of operations in the apparatus of Fig. 1.

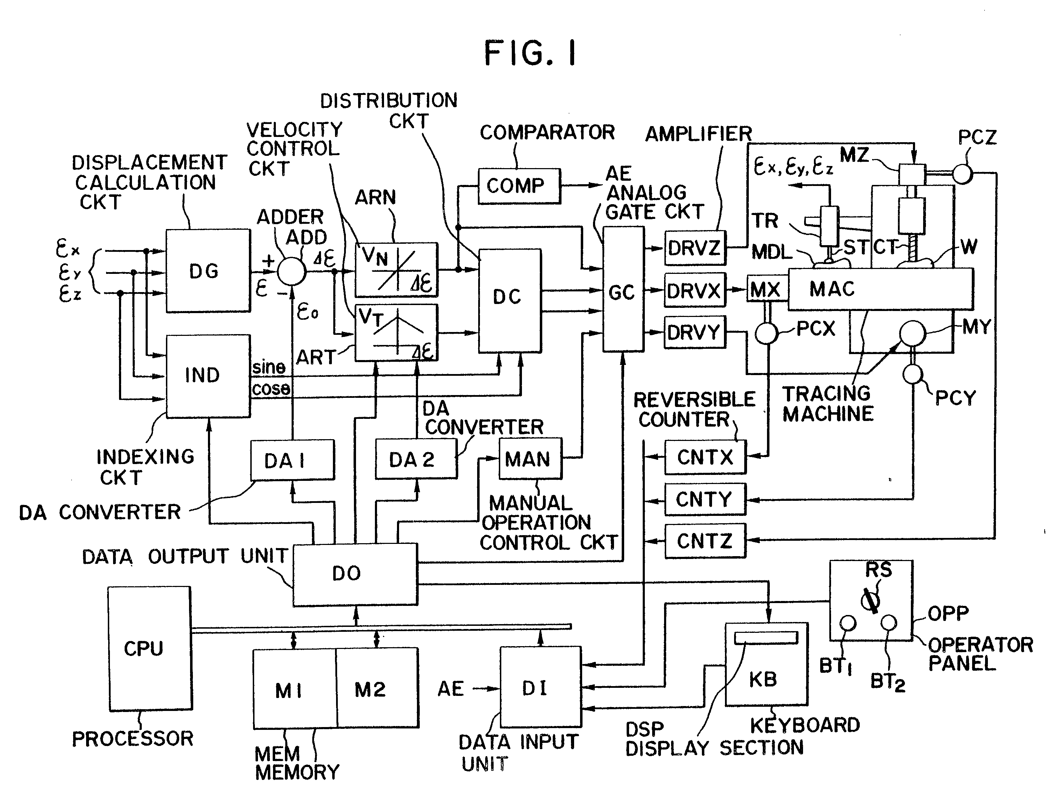

Fig. 1 is a block diagram illustrating tracer control apparatus embodying the present invention. In Fig. 1, DG and IND respectively are a displacement calculation circuit and an indexing circuit which are supplied with displacement signals $\varepsilon_x$, $\varepsilon_y$ and $\varepsilon_z$ from a tracer head TR; ARN and ART are velocity control circuits; ADD is an adder; DC is a distribution circuit; COMP is a comparator; GC is an analog gate circuit; DRVX, DRVY and DRVZ are amplifiers; MX, MY and MZ are servo motors; PCX, PCY and PCZ are position detectors; MDL is a model; ST is a stylus; CT is a cutter; W is a workpiece; MAC is a tracing machine; CNTX, CNTY and CNTZ are reversible counters which count pulses from the position detectors to indicate the current position of the stylus; OPP is an operator panel; RS is a dial for setting velocity or the like; BT1 and BT2 are push buttons; KB is a keyboard; DSP is a display part of the keyboard; DI is a data input unit; MEM is a memory having a data memory part M1 and a control program part M2; DO is a data output unit; CPU is a processor; DA1 and DA2 are D-A converters; and MAN is a manual operation control circuit.

The stylus ST held in contact with the surface of the model MDL is fed by the servo motors and the displacement calculation circuit DG derives a composite displacement signal $\varepsilon = \sqrt{\varepsilon_x{}^2 + \varepsilon_y{}^2 + \varepsilon_z{}^2}$ from displacement signals $\varepsilon_x$, $\varepsilon_y$ and $\varepsilon_z$ corresponding to the displacement of the stylus ST, and the indexing circuit IND provides direction-of-displacement signals $\sin\theta$ and $\cos\theta$. The composite displacement signal $\varepsilon$ is applied to the adder ADD to obtain a difference $\triangle\varepsilon$ between the composite signal $\varepsilon$ and a reference displacement or deflection signal $\varepsilon_0$, which difference $\triangle\varepsilon$ is delivered to the velocity control circuits ARN and ART to obtain a normal-direction velocity signal $V_N$ and a tangential-direction velocity signal $V_T$. These signals $V_N$ and $V_T$ are applied to the distribution circuit DC to yield a velocity command signal in accordance with the direction-of-displacement signals $\sin \theta$ and $\cos \theta$, and the velocity command signal thus obtained is supplied to the analog gate circuit GC. The velocity command signal is then delivered to that one of the amplifiers DRVX, DRVY and DRVZ which is selected by the analog gate circuit GC. By the velocity command signal, the servo motor corresponding to the selected amplifier is driven to feed the cutter CT and the tracer head TR in ganged relation to each other. The operations described above are already well-known in the art.

In the present embodiment of this invention, tracing operation data including data on the reference displacement or deflection signal $\varepsilon_0$ is entered from a source such as keyboard KB for example for storage in the memory MEM, from which the data is read out as tracing operations proceed, and in accordance with the read out data, deflection and tracing path are controlled in the course of machining. That is, the present embodiment permits continuous machining operations from rough to finish machining by automatically changing the reference displacement or deflection for each machining operation in accordance with the stored data concerning reference deflection, without involving such manual operations as have been needed previously for changing reference deflection.

As input data, use can be made of such data, as shown in the following tables, for example.

Table 1

| Item | Symbol | Code |
|------|--------|------|
| Mode | (See Table 2) | A01 |
| Deflection (Initial value) | $\varepsilon_0$ | A02 |
| Deflection (Increased or decreased value) | $\Delta\varepsilon_0$ | A03 |
| Approach Axis | X, Y, Z | A04 |
| Direction of Approach | +, - | A05 |
| Approach Velocity | $V_{AP}$ | F1 |
| Direction of tracing | +, - | A05 |
| Tracing Velocity | $V_{TF}$ | F2 |
| Direction of Pick Feed | +, - | |
| Pick Feed Velocity | $V_{PF}$ | F3 |
| Pick Feed Value | P | A06 |
| Tracing  Turning Position | $L_P$ | X1 |
| " | $L_N$ | X2 |
| Tracing End Position | $L_{TE}$ | Y1 |
| Automatic Return | ON, OFF | A07 |
| Automatic Return Velocity | $V_{AR}$ | F4 |
| Automatic Return Position | $L_{RP}$ | Z1 |

Table 2

| | Mode | Sub-Mode |
|---|---|---|
| 1 | Manual Tracing | |
| 2 | Both-Ways Tracing | 45° Tracing |
| 3 | One-Way Tracing | |
| 4 | 360 Deg. Traing | Axial-Direction Pick |
| | | Z-Axis Pick |
| 5 | Partial Tracing | |
| 6 | Three-Dimensional Tracing | |

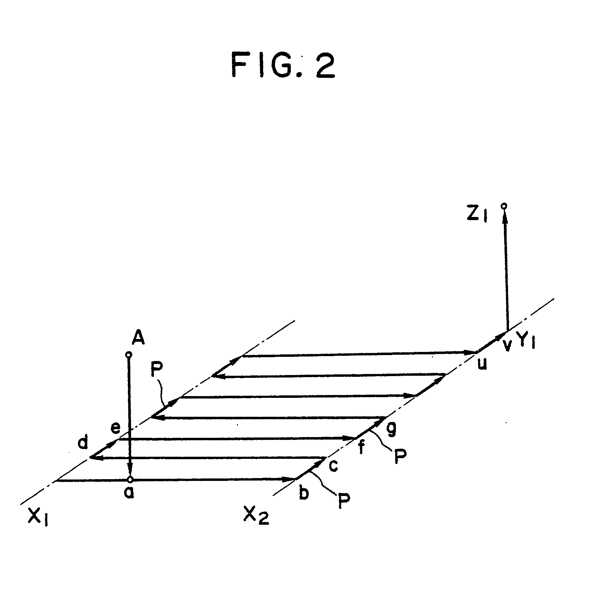

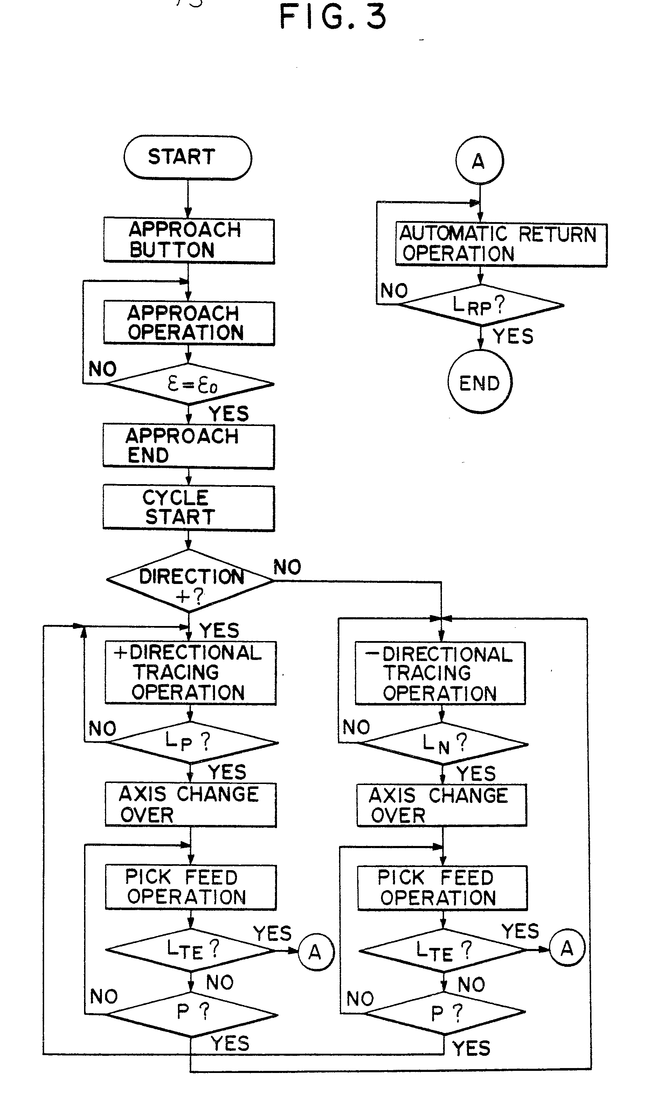

Turning now to Fig. 2, tracer control as provided by apparatus embodying the present invention will be described. In Fig. 2, tracing turning positions $L_P$ and $L_N$ (see Table 1) are X1 and X2; the pick feed value P is AO6; the tracing end position $L_{TE}$ is Y1; the automatic return position $L_{RP}$ is Z1; the (reference) deflection (an initial value AO2) is $\varepsilon_0$ and the stylus ST is controlled in dependence upon the data on the velocity and direction of tracing and so on so that it approaches a point a from a starting point A and traces the model surface following a route a-b-c ... u-v and then automatically returns from the tracing end position Y1 to the automatic return position Z1. In this case, the tracing operation is controlled in accordance with a flowchart such as is depicted in Fig. 3.

Upon depression of an approach button (not shown), the processor CPU reads out data concerning the axis, direction and velocity of approach from the memory MEM and provides a signal via the data output unit DO to the analog gate circuit GC to activate the amplifier DRVZ (in the case of tracer control in accordance with Fig. 2), causing the servo motor MZ to lower the tracer head TR and the cutter CT.  The velocity in this case can be determined by data supplied via the data output unit DO to the D-A converter DA2.

Before the stylus ST is brought into contact with the model MDL, the displacement signals $\varepsilon_x$, $\varepsilon_y$, and $\varepsilon_z$ are zero, and accordingly the difference signal $\Delta\varepsilon$ is equal to the reference deflection signal $\varepsilon_0$. When the composite displacement signal $\varepsilon$ has become equal to the reference deflection signal $\varepsilon_0$ as a result of contact between the stylus ST and the model MDL, the comparator COMP detects $\Delta\varepsilon = 0$, and applies an approach end signal AE to the data input unit DI.  The approach end signal AE is read by the processor CPU to detect the completion of approach, and then tracing is started.

Upon commencement of tracing, the processor CPU reads out data concerning the mode, the reference deflection, the direction of tracing and the feedrate, to start tracer control.  The reference deflection data is converted by the D-A converter DA1 into an analog reference deflection signal $\varepsilon_0$ for input to the adder ADD, and the servo motor MX is driven in a direction in accordance with the direction-of-tracing data.  Further, the processor CPU reads out the tracing turning positions $L_P$ and $L_N$ from the memory MEM and compares them with the content of the reversible counter CNTX representing the current position of the stylus ST.

For example, tracing in a "minus" direction "-", when the content of the reversible counter CNTX and the tracing turning position $L_N$ match each other, the feed axis is changed over and the processor CPU reads out data such as the direction, velocity and quantity of pick feed P to control pick feed.  When the content of the reversible counter CNTY comes to be equal to the pick feed quantity P in the course of the pick feed operation, the processor CPU causes the stylus ST to turn again, that is, controls it to trace in the "plus" direction +. Further, the processor CPU checks whether or not the stylus ST has reached the tracing end position, and if it detects that the tracing end position $L_{TE}$ has been reached during the pick feed operation, the processor CPU reads out the data relating to whether or not the automatic return is ON, automatic return velocity $V_{AR}$ and automatic return position $L_{RP}$, from the memory MEM. Assuming the automatic return is ON, the servo motor MZ is driven and when the content of the reversible counter CNTZ reaches the automatic return position $L_{RP}$, one tracer control operation has been completed.

In the event that repetitive tracing has been preset by the input from the keyboard KB, for example, the processor CPU returns the stylus ST by ordinary positioning control to the approach startingpoint A immediately following the automatic return operation, to carry out tracing once again. In this repeat tracing, the reference deflection is set at $\varepsilon_0 + \Delta\varepsilon_0$ which is the sum of the reference deflection value (the initial value) $\varepsilon_0$ and the deflection value (an increase or decrease value) $\Delta\varepsilon_0$ both read out by the processor CPU and added together. Since the repetitive tracing can be effected by automatically changing the reference deflection for each working operation as described above (by cumulative modification), it is possible to achieve machining operations continuously from rough to finish machining, thereby to reduce machining time. It is alternatively possible to prestore reference deflections $\varepsilon_{01}$ to $\varepsilon_{0n}$ relating to respective successive tracing operations O1 to On in the memory MEM and to read them out one by one instead of cumulatively adding $\Delta\varepsilon_0$ to $\varepsilon_0$ for each tracing operation. Further, by prestoring increase or decrease values for pick feed and tracer head feed rate in the memory, pick feed and tracer head feed rate can also be altered automatically for example in response to a change in the reference deflection, enabling more appropriate tracer control to be

0036459

effected for rough and finish machining operations.

The tracing turning positions $L_P$ and $L_N$, the tracing end position $L_{TE}$, the automatic return position $L_{RP}$ and the pick feed quantity P may alternatively be obtained by writing in the memory MEM the contents of the reversible counters obtained when the stylus ST is shifted to those respective positions in a manual feed mode, instead of entering the data from the keyboard KB.

Also, during tracing operations, reference deflection and the tracing path can be corrected by reloading the data in the memory MEM. For example, the data in the memory MEM can be read out therefrom and displayed on the display DSP and the data reloaded by manipulation of the keyboard KB; thus, the reference deflection and so forth can be corrected with ease.

In the apparatus described above, all data defining tracing operations are prestored in a memory for controlling the tracing operation, but in other embodiments of the present invention, all the data need not always be prestored; for example, the tracing turning position and the like may also be controlled by means of a limit switch.

As has been described above, apparatus embodying the present invention permits repetitive tracing by changing the reference deflection by a predetermined value automatically for each successive machining, in accordance with prestored data concerning the deflection, and consequently automatic machining operations can be carried out continuously from rough to finish machining, resulting in the entire working time being greatly reduced.

It will be apparent that many modifications and variations may be effected without departing from the scope of the novel concepts of the present invention.

Thus, apparatus embodying the present invention can effect tracer control by calculating the direction and velocity of tracing using signals from a tracer head tracing the model surface, and the apparatus is

0036459

provided with an input unit for entering data defining the tracing operation, a memory for storing the entered data and a processor for readingout the data from the memory to control respective parts of a tracer control machine. Of the data defining the tracing operation, stored in the memory, data concerning the reference displacement ($\varepsilon_0$) for the tracer head is read out by the processor to change the reference displacement for successive profile modelling operations, thereby providing for automatic performance of repetitive tracing.

CLAIMS

1.    Tracer control apparatus, characterised by a memory holding data determining tracer machining operations to be effected, including reference deflection data designating an initial reference deflection signal value for comparison, in a first tracing operation, with a composite displacement signal derived from displacement signals from the tracer head of tracer machining apparatus with which the control apparatus is employed, and data determining successive further reference deflection signal values for successive further tracer machining operations, and

   a processor  operable  to read out the data held in the memory, and in dependence upon the read out data, to apply control signals to the tracer machining apparatus such as to cause the machining apparatus to effect initial and successive tracer machining operations in accordance with the stored reference deflection data.

2.    Tracer control apparatus as claimed in claim 1, wherein the reference deflection data held in the memory designates an initial reference deflection signal value and reference deflection signal value increments of increased. or decreased values.

3.    Tracer control apparatus as claimed in claim 1, wherein the reference deflection data held in the memory designates an initial reference deflection signal value and a reference deflection signal value variation, and the processor is operable to add the reference deflection signal value variation to the initial reference deflection signal value, after a first tracing operation, to provide a further reference deflection signal value for the next tracing operation, and so on.

4.    Tracer control apparatus as claimed in claim 1, wherein the reference deflection data held in the memory designates $n$ reference deflection signal values respectively for $n$ successive tracing operations.

5.    Tracer control apparatus as claimed in any preceding claim, including an input unit for entering the data determining tracer machining operations into the memory.

6. Tracer control apparatus as claimed in any preceding claim, operable to calculate tracer direction and velocity information from the tracer head of the tracer machining apparatus.

7. Tracer control apparatus as claimed in any preceding claim, in operative combination with the tracer machining apparatus.

8. Tracer control apparatus, characterised by a memory holding data determining tracer machining operations to be effected, including pick feed and/or tracer head feed rate data designating an initial pick feed value and/or an initial tracer head feed rate value, and data determining successive further pick feed values and/or tracer head feed rate values, and

a processor operable to read out the data held in the memory, and in dependence upon the read out data, to apply control signals to tracer machining apparatus such as to cause the apparatus to effect initial and successive tracer machining operations in accordance with the stored pick feed and/or tracer head feed rate data.

9. Tracer control apparatus as claimed in claim 1, characterised in that there is provided a memory holding data determining tracer machining operations to be effected, including pick feed and/or tracer head feed rate data designating an initial pick feed value and/or an initial tracer head feed rate value, and data determining successive further pick feed values and/or tracer head feed rate values, and

a processor operable to read out the data held in the memory, and in dependence upon the read out data, to apply control signals to tracer machining apparatus such as to cause the apparatus to effect initial and successive tracer machining operations in accordance with the stored pick feed and/or tracer head feed rate data, and wherein the pick feed and/or tracer head feed rate are altered automatically in response to a change in the reference deflection.

# FIG. I

PCZ — MZ — W — STCT — MDL — TR — MX — PCX — MY — PCY — TRACING MACHINE — MAC — $\varepsilon_x, \varepsilon_y, \varepsilon_z$

DRVZ — DRVX — DRVY — COMPARATOR AMPLIFIER — AE ANALOG GATE CKT — GC

COMP — DC — DISTRIBUTION CKT

CNTX — CNTY — CNTZ — REVERSIBLE COUNTER

VELOCITY CONTROL CKT — ARN — $V_N$ / $\Delta\varepsilon$ — $V_T$ / $\Delta\varepsilon$ — ART

MAN — MANUAL OPERATION CONTROL CKT — DA CONVERTER — DA2 — DA1

DISPLACEMENT CALCULATION CKT — DG — IND — INDEXING CKT — ADDER ADD $\Delta\varepsilon$ — $\varepsilon$ + — $\varepsilon$ − — $\varepsilon_0$ — sine — cos$\theta$

$\varepsilon_x$ $\varepsilon_y$ $\varepsilon_z$

DO — DATA OUTPUT UNIT — DI — DATA INPUT UNIT — AE

KB — KEYBOARD — DSP DISPLAY SECTION

OPP — OPERATOR PANEL — RS — BT1 — BT2

M1 — M2 — MEM MEMORY — CPU — PROCESSOR

FIG. 2

# FIG. 3

0036459

# EUROPEAN SEARCH REPORT

European Patent Office

Application number

EP 80 30 0882.0

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| A | <u>GB - A - 2 017 344</u> (FUJITSU FANUC LTD.)<br>* fig. 1 to 4 *<br>& DE - A1 - 2 847 027<br><br>-- | | G 05 B  19/18<br>B 23 Q  35/12 |
| A | <u>US - A - 4 061 907</u> (OKAMOTO et al.)<br>* fig. 1 to 15 *<br><br>-- | | |
| A | <u>US - A - 4 017 723</u> (E.D. FICKES)<br>* fig. 3 *<br><br>-- | | TECHNICAL FIELDS SEARCHED (Int.Cl.3)<br><br>B 23 Q  35/00<br>G 05 B  19/00 |
| A | <u>DE - A - 2 203 034</u> (ALLEN-BRADLEY CO.)<br>* fig. 1 to 9 *<br><br>-- | | |
| A | Patents Abstacts of Japan<br>Vol. 3, No. 8, 25 January 1979,<br>page 136 M 46<br>& JP - A - 53 - 134 183<br><br>-- | | |
| A | Patents Abstracts of Japan<br>Vol. 3, No. 148, 7 December 1979,<br>page 156 M 83<br>& JP - A - 54 - 125375<br><br>--<br><br>./.. | | |

CLASSIFICATION OF THE APPLICATION (Int. Cl.3)

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search<br>Berlin | Date of completion of the search<br>20-11-1980 | Examiner<br>BREUSING | |

EPO Form 1503.1  06.78

European Patent
Office

**EUROPEAN SEARCH REPORT**

0036459
Application number

EP 80 30 0882.0

- page 2 -

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| A | WERKSTATTSTECHNIK, Vol. 68, No. 6, June 1978 T. WALKER "Programmieren an einer CNC mit Handeingabe" pages 325 to 328 ---- | | |
| | | | TECHNICAL FIELDS SEARCHED (Int. Cl.3) |